# FASCICULE DE BREVET EUROPEEN

(11) **EP 2 816 778 B1**
(45) Date de publication et mention de la délivrance du brevet: **28.12.2022**
(21) Numéro de dépôt: 14172575.4
(22) Date de dépôt: 16.06.2014
(51) Int. Cl.: H04L 67/141, H04L 65/1069, H04L 69/24

(54) **Etablissement de communication entre une application Web et un terminal**
Aufbau einer Kommunikation zwischen einer Internetanwendung und einem Endgerät
Establishing a communication between a Web application and a terminal

(30) Priorité: 21.06.2013 FR 1355939
(43) Date de publication de la demande: 24.12.2014
(73) Titulaire: Orange, 92130 Issy-les-Moulineaux (FR)
(72) Inventeur: Bertin, Emmanuel, 14530 Luc sur Mer (FR); Cazeaux, Stéphane, 14280 Authie (FR)

(56) Documents cités:
- Sam Dutton: "Getting Started with WebRTC", , 23 juillet 2012 (2012-07-23), XP055103693, Extrait de l'Internet: URL:http://www.html5rocks.com/en/tutorials /webrtc/basics/ [extrait le 2014-02-21]
- UBERTI GOOGLE C JENNINGS CISCO SYSTEMS J ET AL: "Javascript Session Establishment Protocol; draft-ietf-rtcweb-jsep-00.txt", JAVASCRIPT SESSION ESTABLISHMENT PROTOCOL; DRAFT-IETF-RTCWEB-JSEP-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 4 mars 2012 (2012-03-04), pages 1-27, XP015081017,
- REDDY CISCO J KAIPPALLIMALIL HUAWEI RAM MOHAN RAVINDRANATH CISCO R EJZAK ALCATEL-LUCENT T: "Considerations with WebRTC in Mobile Networks; draft-reddy-rtcweb-mobile-03.txt", CONSIDERATIONS WITH WEBRTC IN MOBILE NETWORKS; DRAFT-REDDY-RTCWEB-MOBILE-03.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 9 mai 2013 (2013-05-09), pages 1-16, XP015091096,
- Anonymous: "List of SIP response codes - Wikipedia", , 28 May 2013 (2013-05-28), XP055665126, Retrieved from the Internet: URL:https://en.wikipedia.org/w/index.php?t itle=List_of_SIP_response_codes&oldid=5570 98449 [retrieved on 2020-02-04]

## Description

L'invention se situe dans le domaine des télécommunications et plus particulièrement dans le domaine des applications Web.

De façon connue, une application Web (ou « webapp » en anglais) est un logiciel téléchargé au sein d'une instance d'un navigateur d'un terminal d'un utilisateur et s'exécute au sein de la même instance du navigateur dudit terminal.

Egalement, de façon connue, un navigateur permet de communiquer avec le monde du Web, c'est-à-dire de communiquer avec des serveurs distants via le réseau Internet.

Un mécanisme appelé webRTC (pour « web Real Time Communication » en anglais) permet de réaliser des communications temps réel entre deux navigateurs. Une application web téléchargée sur chaque navigateur permet d'émettre et de recevoir des flux de communication.

Les mécanismes permettant de recevoir et d'émettre des appels ne sont pas spécifiés dans les travaux webRTC et laissés à l'implémentation de chaque fournisseur de service.

Des travaux émergents cherchent à réaliser des services de communication en faisant transiter les messages de signalisation via un protocole de transport web, par exemple le protocole Websocket. Websocket est un protocole de transport web, défini par l'IETF (pour « Internet Engineering Task Force ») dans la RFC (pour « Request For Comments ») 6455. Le protocole Websocket est un protocole de transport de données. Il permet d'établir et de disposer d'un canal de communication entre un navigateur et un serveur distant, typiquement un serveur web. Ce canal de communication appelé « connexion websocket » est un canal bidirectionnel et full-duplex, c'est-à-dire un canal bidirectionnel pour lequel l'envoi et la réception peuvent s'effectuer simultanément entre le navigateur et le serveur web. Il existe d'autres protocoles de transport web, comme par exemple le protocole Bayeux ( http://svn.cometd.com/trunk/bayeux/bayeux.html ).

Les travaux de recherche portent notamment sur de nouveaux mécanismes de communication adaptés au mode du Web, implémentés au-dessus d'un protocole de transport web.

Ces mécanismes sont notamment adaptés pour établir une session de communication avec une entité reliée au réseau Internet, par exemple un serveur Web, en s'appuyant sur un protocole défini pour le monde du Web

Un tel protocole définit notamment des commandes à utiliser pour initialiser une session de communication.

Cependant, certaines entités existantes, notamment les terminaux utilisant le protocole SIP (pour « Session Initiation Protocol »), ne comprennent pas les commandes fournies par ce protocole et doivent être jointes via l'utilisation d'un autre protocole, par exemple le protocole SIP.

Il n'est actuellement pas possible pour le navigateur web de déterminer quel protocole utiliser pour appeler une entité distante.

Le document «Getting Started with WebRTC», 23 juillet 2012 (2012-07-23), XP055103693, Extrait de l'Internet:URL:http://www.html5rocks.com/en/tutorials/webrtc/basics/ [extrait le 2014-02-21] décrit le fonctionnement général du protocole WebRTC.

Un des buts de l'invention est de remédier à des insuffisances/inconvénients de l'état de la technique et/ou d'y apporter des améliorations.

L'invention vient améliorer la situation.

A cet effet, l'invention se rapporte à un procédé d'établissement d'une session de communication entre une instance d'une application Web installée dans un terminal et une entité appelée, conforme à la revendication 1.

L'invention se rapporte également à un procédé de traitement d'une demande d'établissement d'une session de communication entre une instance d'une application Web installée dans un terminal et une entité appelée, conforme à la revendication 7.

L'invention se rapporte également à un terminal conforme à la revendication 9.

L'invention se rapporte encore à un produit programme d'ordinateur selon la revendication 10 comprenant des instructions pour mettre en œuvre les étapes du procédé d'établissement d'une session de communication tel que décrit précédemment, lorsqu'il est chargé et exécuté par un processeur.

L'invention se rapporte enfin à un produit programme d'ordinateur selon la revendication 11 comprenant des instructions pour mettre en œuvre les étapes du procédé de traitement d'une demande d'établissement d'une session de communication tel que décrit précédemment, lorsqu'il est chargé et exécuté par un processeur.

Les revendications 2-6 et 8 correspondent à des modes de réalisation préférés.

D'autres particularités et avantages de la présente invention apparaitront dans la description suivante de modes de réalisation donnés à titre d'exemples non limitatifs, en référence aux dessins annexés, dans lesquels :
- la figure 1 est un schéma illustrant un système selon un mode de réalisation de l'invention,
- la figure 2 est un schéma bloc représentant un terminal apte à réaliser les étapes d'un procédé d'établissement d'une session de communication selon un mode de réalisation de l'invention,
- la figure 3 est un schéma bloc représentant un serveur apte à réaliser les étapes d'un procédé d'établissement d'une session de communication,
- la figure 4 est un schéma bloc représentant un serveur de gestion,
- la figure 5 est un organigramme illustrant les différentes étapes d'un procédé d'établissement d'une session de communication et d'un procédé de traitement d'une demande d'établissement d'une session de communication selon un mode de réalisation de l'invention,
- la figure 6 est un organigramme illustrant les différentes étapes d'un procédé d'enregistrement d'une instance d'application.

L'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

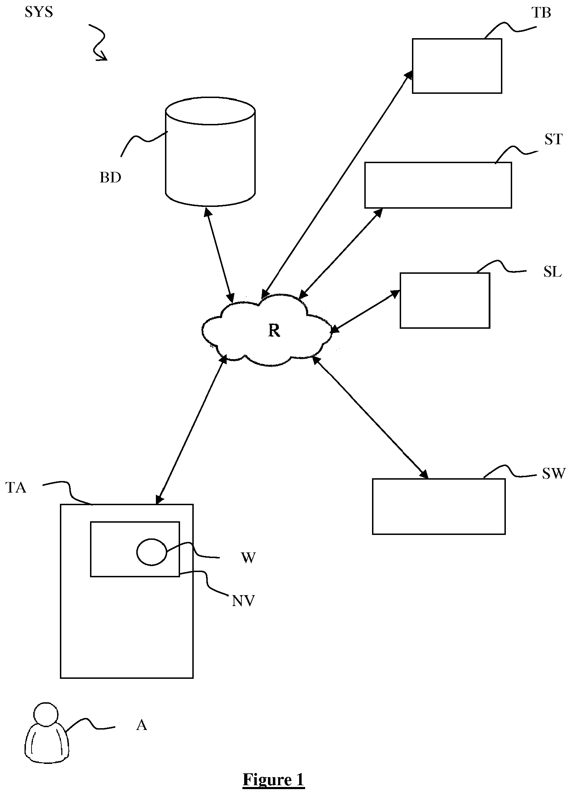

Un mode de réalisation d'un procédé d'établissement d'une session de communication et d'un procédé de traitement d'une demande d'établissement d'une session de communication va maintenant être décrit en référence aux figures 1 à 4.

En référence à la **figure 1**, un système SYS comprend un terminal TA d'un utilisateur A, un serveur de connexion SW, un serveur de gestion SL et une base de données BD aptes à communiquer entre eux via un réseau de communication R.

Le réseau de communication R comprend le réseau Internet et/ou un réseau Intranet.

Le terminal TA est par exemple un ordinateur de type PC.

A titre d'alternative, le terminal TA est un terminal mobile.

Plus généralement, le terminal TA est un équipement apte à accéder au réseau R au moyen d'un navigateur web.

La base de données BD comporte d'une part une base d'enregistrement des applications web et une table de routage.

A titre d'alternative, la base d'enregistrement des applications web et la table de routage sont enregistrées dans des bases de données différentes.

Egalement, à titre d'alternative, le système SYS comporte plusieurs tables de routage et plusieurs bases d'enregistrement.

Le système SYS comporte également un terminal TB et un serveur de transmission ST.

Le serveur de transmission ST est apte à recevoir des messages de signalisation, par exemple des requêtes de type SIP en provenance d'une première entité connectée au réseau R et à les retransmettre en direction d'une deuxième entité indiquée dans ledit message de signalisation.

Le serveur de transmission ST est également apte à recevoir un ou plusieurs flux média et à le retransmettre.

Le terminal TB est apte à communiquer avec le serveur de transmission ST via le réseau R. Le terminal TB est notamment apte à recevoir et à émettre des messages de signalisation de type SIP et à émettre et à recevoir un ou plusieurs flux médias.

A titre d'alternative, le terminal TB est un terminal raccordé au réseau RTC (Réseau Téléphonique Commuté) et est apte à communiquer avec le serveur de transmission ST via une passerelle adaptée pour convertir les messages SIP en signaux RTC et réciproquement.

De façon plus générale, le terminal TB est une entité apte à communiquer avec le réseau R et n'est pas connectée au monde de l'Internet.

Dans le mode de réalisation décrit, le serveur de connexion SW, le serveur de gestion SL et le serveur de traitement ST sont trois entités différentes. A titre d'alternative, ces entités sont regroupées en une ou deux entités.

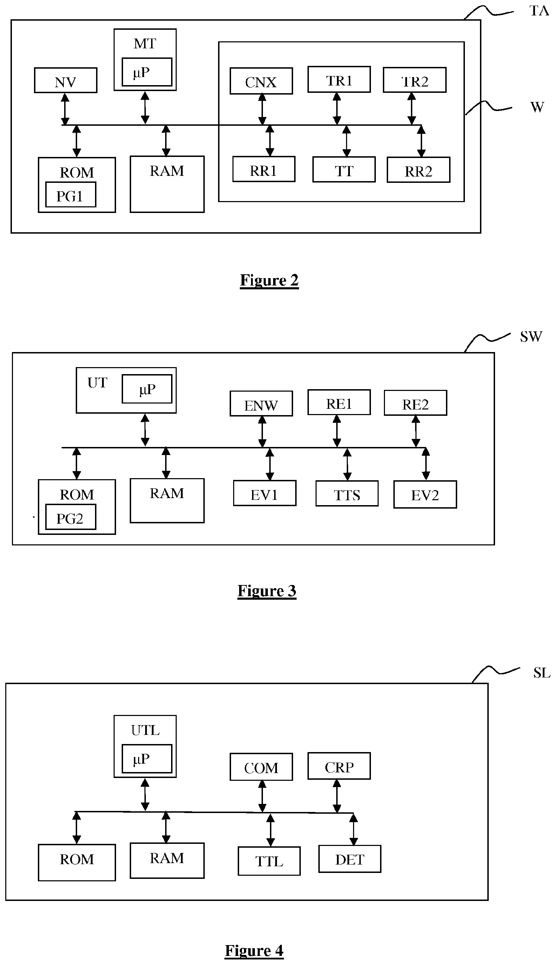

La **figure 2** représente un schéma bloc illustrant un terminal TA selon un mode de réalisation.

Le terminal TA comporte de façon connue, notamment une unité de traitement MT équipée d'un microprocesseur, une mémoire morte de type ROM, une mémoire vive de type RAM. Le terminal TA peut comporter de manière classique et non exhaustive les éléments suivants: un clavier, un écran, un microphone, un haut-parleur, un lecteur de disque, un moyen de stockage...

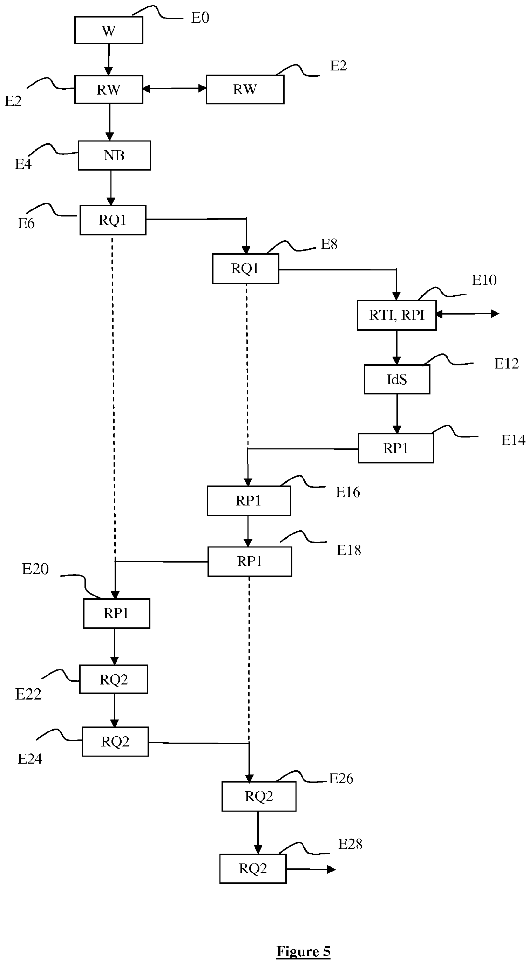

La mémoire morte de type ROM comporte des registres mémorisant un programme d'ordinateur PG1 comportant des instructions de programme adaptées à mettre en œuvre un procédé d'établissement d'une session de communication selon un mode de réalisation de l'invention décrit ultérieurement en référence à la figure 5.

Le terminal TA contient un navigateur NV.

Le navigateur NV est un navigateur web, c'est-à-dire un logiciel conçu pour consulter le World Wide Web.

Le terminal TA comporte également un module de connexion CNX, un premier module d'envoi TR1, un premier module de réception RR1, un deuxième module d'envoi TR2, un deuxième module de réception RR2 et un module de traitement TT.

La **figure 3** représente un schéma bloc illustrant un serveur de connexion SW**.**

Le serveur de connexion SW est par exemple un serveur et comporte de façon connue, notamment une unité de traitement UT équipée d'un microprocesseur, une mémoire morte de type ROM, une mémoire vive de type RAM.

La mémoire morte de type ROM comporte des registres mémorisant un programme d'ordinateur PG2 comportant des instructions de programme adaptées à mettre en œuvre un procédé de traitement d'une demande d'établissement de session de communication selon un mode de réalisation de l'invention décrit ultérieurement en référence à la figure 5.

Le serveur de connexion SW comporte également un module d'enregistrement d'application ENW, un premier module de réception RE1, un premier module d'envoi EV1, un deuxième module de réception RE2, un deuxième module d'envoi EV2 et un module de traitement TTS.

La **figure 4** représente un schéma bloc illustrant un serveur de gestion SL.

Le serveur de gestion SL est par exemple un serveur et comporte de façon connue, notamment une unité de traitement UTL équipée d'un microprocesseur, une mémoire morte de type ROM, une mémoire vive de type RAM.

Le serveur de connexion SW comporte également un module de communication COM, un module de construction CRP, un module de détermination DET et un module de traitement TTL.

Un mode de réalisation d'un procédé d'établissement d'une session de communication et d'un procédé de traitement d'une demande d'établissement d'une session de communication, mis en œuvre dans le système SYS, va maintenant être décrit en référence à la **figure 5****.**

Lors d'une étape préalable E0, suite à une action de l'utilisateur A, une instance W d'une application web est téléchargée sur le terminal TA.

De façon connue, l'instance de l'application W est reçue et enregistrée par le navigateur NV du terminal TA en réponse à une requête de téléchargement transmise par le navigateur NV du terminal TA à destination d'un serveur de téléchargement (non représenté).

L'instance d'application reçue W comprend en paramètre une adresse AD du serveur de connexion SW.

L'adresse AD est par exemple une URL (pour « Uniform Resource Locator » en anglais) associée au serveur de connexion SW.

A titre d'alternative, l'instance d'application W comprend en paramètre au moins une adresse d'un serveur de gestion de service (non représenté) apte à communiquer une adresse d'un serveur de connexion.

Lors d'une étape préalable E2, suite par exemple à une action de l'utilisateur A pour lancer l'exécution de l'instance d'application W, l'instance d'application W s'enregistre auprès du serveur de connexion SW.

Plus précisément, le module de connexion CNX du terminal TA demande l'enregistrement de l'instance d'application W au serveur de connexion SW. Le module d'enregistrement d'application ENW du serveur de connexion SW établit un canal de communication entre le navigateur NV du terminal TA et le serveur de connexion SW, puis enregistre ladite instance d'application W.

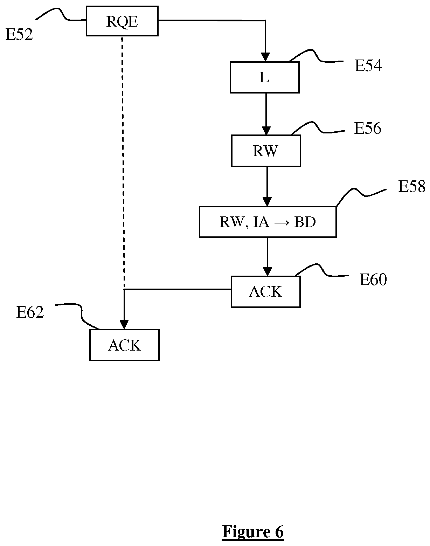

Un exemple de réalisation d'une procédure d'enregistrement de l'instance d'application W auprès du serveur de connexion SW est décrit dans la suite de la description en référence à la figure 6.

La procédure d'enregistrement permet notamment la détermination par le serveur de connexion SW d'un identifiant d'instance RW et l'enregistrement dans la base de données BD dudit identifiant d'instance en association avec un identifiant IA de l'utilisateur A.

L'identifiant d'utilisateur IA est un identifiant de joignabilité de l'utilisateur A, par exemple un numéro de téléphone d'un terminal de l'utilisateur A, par exemple du terminal TA, ou une adresse de messagerie de l'utilisateur A. L'identifiant d'utilisateur IA est propre à l'utilisateur A. Il permet d'identifier de façon unique l'utilisateur A.

Dans le mode de réalisation décrit, l'identifiant d'instance RW déterminé est transmis au terminal TA par le serveur de connexion SW.

Lors d'une étape E4, le module de traitement TT du terminal TA obtient un identifiant NB du terminal TB.

L'identifiant NB est par exemple un numéro de téléphone à 10 chiffres saisi par un utilisateur du terminal TA au moyen d'une interface utilisateur du terminal TA.

L'étape E4 est suivie d'une étape E6 lors de laquelle le premier module d'envoi TR1 du terminal TA envoie une première requête d'établissement de communication RQ1 à destination du serveur de connexion SW.

La première requête d'établissement de communication RQ1 contient l'identifiant d'instance RW de l'instance d'application W et l'identifiant NB du terminal TB.

Le terminal TB représente une entité appelée.

La première requête RQ1 contient également un identifiant de commande indiquant que la première requête RQ1 est une demande d'établissement d'une session de communication.

La première requête est par exemple encodée au format JSON (JavaScript Object Notation).

La première requête d'établissement de communication RQ1 est formulée dans un premier protocole PT1.

Lors d'une étape E8, le serveur de connexion SW reçoit la première requête RQ1 et transmet cette première requête RQ1 au serveur de gestion SL.

Plus précisément, la requête RQ1 est reçue par le premier module de réception RE1 du serveur de connexion SW et transmise au serveur de gestion SL par le module de traitement TTS du serveur de connexion SW.

A titre d'alternative, dans le cas où l'identifiant d'instance RW n'est pas transmis au terminal TA lors de la phase d'enregistrement, la première requête RQ1 comprend un identifiant IA de l'utilisateur A, par exemple une adresse mail de l'utilisateur A et le serveur de connexion SW remplace, dans la requête RQ1, l'identifiant d'utilisateur IA par l'identifiant d'instance RW avant de transmettre la première requête RQ1 au serveur de gestion SL.

Egalement à titre d'alternative, l'identifiant d'utilisateur IA contenu dans la requête RQ1 est remplacé par l'identifiant d'instance RW par le serveur de gestion SL.

Lors d'une étape E10, le module de communication COM du serveur de gestion SL reçoit la première requête RQ1 et le module de traitement TTL du serveur de gestion SL envoie à destination de la base de données BD, une requête de traitement RTI contenant l'identifiant NB du terminal TB contenu dans la première requête RQ1 reçue. L'identifiant du terminal TB n'étant pas un identifiant d'une application web, il n'est pas référencé en tant que tel dans la base de données BD et le serveur de gestion SL reçoit une réponse RPI à la requête de traitement RTI indiquant l'absence de l'identifiant NB dans la base d'enregistrement des applications web de la base de données BD.

La réponse RPI est reçue par le module de communication COM du serveur de gestion SL. Cette réponse est interprétée par le serveur de gestion SL comme signifiant que l'identifiant NB contenu dans la première requête RQ1 n'est pas un identifiant d'une application web et que la session de communication doit être établie selon un deuxième protocole PT2.

Le deuxième protocole PT2 est dans le mode de réalisation décrit, le protocole SIP.

Lors d'une étape E12, le module de détermination DET du serveur de gestion SL détermine un identifiant de session IdS.

L'identifiant de session IdS est un identifiant unique généré par le serveur de gestion SL. L'identifiant de session IdS est par exemple généré à partir de l'identifiant d'instance RW de l'application web W et de l'identifiant NB du terminal TB convertis au format SIP.

Par exemple, l'identifiant de session IdS est généré par un chiffrement symétrique d'une chaine de données formée par la concaténation de l'identifiant d'instance RW converti au format SIP et de l'identifiant du terminal TB converti au format SIP. Une valeur aléatoire telle que par exemple une date peut être ajoutée à ces données pour, par exemple, limiter la durée de validité de l'identifiant de session.

L'identifiant de session IdS est construit pour ne pas être falsifiable ni prédictible par l'instance d'application W.

A titre d'alternative, la génération d'un identifiant de session unique est effectuée par une autre méthode connue de l'état de l'art.

Lors d'une étape E14, le module de construction CRP du serveur de gestion SL construit une réponse RP1 à la première requête RQ1 et le module de communication COM du serveur de gestion SL envoie la réponse RP1 construite au serveur de connexion SW.

La réponse RP1 indique que la première requête RQ1 n'est pas valide car elle ne peut être acheminée jusqu'à l'entité appelée. En d'autres termes, la réponse RP1 indique une impossibilité d'acheminer la première requête RQ1.

La réponse RP1 contient par exemple un message de type texte ou un code d'erreur indiquant que la session ne communication ne peut être établie en utilisant le protocole PT1.

A titre d'alternative, la réponse RP1 indique que l'entité TB doit être jointe en utilisant le protocole SIP.

La réponse RP1 contient par exemple un identifiant de deuxième protocole indiquant le protocole à utiliser pour joindre l'entité TB. Un identifiant de deuxième protocole représente un exemple de paramètre de deuxième protocole.

Egalement, à titre d'alternative, l'indication d'impossibilité d'acheminement de la première requête contenue dans la réponse RP1 est implicite.

Dans le mode de réalisation décrit, la réponse RP1 contient l'identifiant de session IdS, l'identifiant de l'entité appelante, c'est-à-dire l'identifiant d'instance RW de l'instance d'application web W, converti dans le format SIP-URI (pour « Uniform Resource Identifier » en anglais) et l'identifiant de l'entité appelée TB converti dans le format SIP-URI.

Les identifiants de l'entité appelante et de l'identité appelée au format SIP-URI sont par exemple obtenus par consultation de la table de routage contenue dans la base de données BD.

A titre d'alternative, la conversion de format est effectuée par le serveur de gestion SL par application de règles de conversion prédéfinies.

Les identifiants de l'entité appelante et de l'identité appelée au format SIP-URI représentent des paramètres de deuxième protocole.

Dans le mode de réalisation décrit, la réponse RP1 contient également des informations de routage de l'appel SIP à générer. Ces informations de routage sont par exemple des informations de portabilité ou un préfixe à ajouter à l'identifiant de l'entité appelée. Les informations de routage représentent également des paramètres de deuxième protocole.

La réponse RP1 est par exemple un message « switch protocol to SIP » contenant les données de l'appel SIP (numéro appelant, numéro appelé).

A titre d'alternative, la réponse RP1 ne contient pas d'identifiant de session.

La réponse RP1 est reçue par le serveur de connexion SW lors d'une étape E16.

Lors d'une étape E18, le premier module d'envoi EV1 du serveur de connexion SW transmet la réponse RP1 à destination de l'instance d'application W.

La réponse RP1 est reçue par le premier module de réception RR1 du terminal TA lors d'une étape E20.

Lors d'une étape E22, le module de traitement TT du terminal TA construit une deuxième requête d'établissement de session de communication RQ2.

La deuxième requête RQ2 est formulée selon un deuxième protocole PT2

Dans le mode de réalisation décrit où le deuxième protocole PT2 est le protocole SIP, la deuxième requête RQ2 est une requête SIP, par exemple un message SIP INVITE.

Par exemple, l'identifiant d'instance RW converti au format SIP-URI est utilisé pour former un entête de type « from », l'identifiant BB au format SIP-URI est utilisé pour former un entête de type « to » et l'identifiant de session IdS est inséré dans un champ d'extension, par exemple nommé champ « X-MCOP-COOKIE ».

L'identifiant de l'instance d'application RW converti dans le format SIP, l'identifiant NB du terminal TB au format SIP et l'identifiant de session IdS sont par exemple extraits de la réponse RP1.

A titre d'alternative, l'identifiant de l'instance d'application RW converti dans le format SIP et/ou l'identifiant NB du terminal TB au format SIP sont obtenus par requête spécifique du terminal TA auprès du serveur de gestion SL ou de la base de données BD.

Lors d'une étape E24, le deuxième module d'envoi TR2 du terminal TA transmet la deuxième requête RQ2 à destination du serveur de connexion SW.

L'étape E24 est suivie d'une étape E26 lors de laquelle la deuxième requête RQ2 est reçue par le deuxième module de réception RE2 du serveur de connexion SW.

Egalement, lors de l'étape E26, le module de traitement TTS du serveur de connexion SW extrait l'identifiant de session IdS de la deuxième requête RQ2 reçue et vérifie la validité de l'identifiant de session extrait.

Il est précisé que seul le serveur de gestion SL peut générer l'identifiant de session IdS mais que l'identifiant de session peut être vérifié par une autre entité.

Dans le cas où l'identifiant de session IdS est valide, le serveur de connexion SW retransmet la deuxième requête RQ2 à destination du terminal TB via le serveur de traitement ST (étape E28).

Dans le cas où l'identifiant de session IdS n'est pas valide, le serveur de connexion SW ne retransmet pas la deuxième requête RQ2 et le deuxième module d'envoi EV2 du serveur de connexion SW envoie à l'instance d'application Web W du terminal TA, une réponse à la deuxième requête RQ2 indiquant que la session de communication ne peut être établie. La réponse à la deuxième requête RQ2 signale un refus d'établissement de la session de communication. La réponse à la deuxième requête RQ2 est alors reçue par le deuxième module de réception RR2 du terminal TA.

La réception de la deuxième requête RQ2 par le terminal TB déclenche de façon classique la négociation de l'établissement d'une session de communication, via l'échange de messages de signalisation, puis l'échange d'un ou plusieurs flux média entre l'instance d'application W et le terminal TB.

Les étapes E6, E20, E22 et E24, mises en œuvre par le terminal TA, représentent les étapes du procédé d'établissement d'une session de communication.

Les étapes E8, E14, E16, E18, E26 et E28, mises en œuvre par le serveur de connexion SW, représentent les étapes du procédé de traitement d'une demande d'établissement d'une session de communication.

Dans une variante de réalisation, la deuxième requête RQ2 construite lors de l'étape E22 est transmise lors de l'étape E24 par le terminal TA directement au serveur de traitement ST. Dans cette variante, la vérification de l'identifiant de session IdS est effectuée par le serveur de traitement ST.

Dans le mode de réalisation décrit, le premier protocole PT1 est un protocole web et le deuxième protocole PT2 est le protocole SIP.

L'invention s'applique également à d'autres protocoles. Par exemple, le premier protocole est le protocole SIP et le deuxième protocole est un protocole web.

A titre d'alternative, le deuxième protocole est choisi parmi une pluralité de protocoles par le serveur SL en fonction de l'entité appelée TB.

L'enregistrement de l'application web W auprès du serveur de connexion va maintenant être décrit en référence à la **figure 6****.**

Lors d'une étape E52, suite par exemple à une action de l'utilisateur du terminal TA pour lancer l'exécution de l'instance d'application W, l'instance d'application W envoie une requête d'établissement de connexion RQE au serveur de connexion SW au moyen de l'adresse AD reçue en paramètre lors du téléchargement de l'instance d'application W.

A titre d'alternative, l'adresse AD du serveur de connexion SW n'est pas reçue lors de la phase de téléchargement et l'adresse AD du serveur de connexion SW est reçue par l'instance d'application W en réponse à une demande d'adresse effectuée auprès d'un serveur de gestion de service dont l'adresse a été reçue en paramètre lors du téléchargement de l'instance d'application W.

Egalement, à titre d'alternative, l'adresse AD du serveur de connexion SW est obtenue par l'instance d'application W par une recherche de type DNS ( pour « Domain Name System » en anglais).

La requête d'établissement de connexion RQE est reçue par le serveur de connexion SW lors d'une étape E54 et le serveur de connexion SW établit un canal de communication L avec le navigateur NV. Le canal de communication L est par exemple une connexion de type Websocket.

Le canal de communication L permet, de façon connue, une communication entre le serveur de connexion SW et le navigateur NV et, en conséquence une communication entre le serveur de connexion SW et l'instance d'application W.

Lors d'une étape E56, le serveur de connexion SW commande la détermination d'un identifiant d'instance RW pour l'instance d'application W.

Dans le mode de réalisation décrit, l'identifiant d'instance RW est déterminé par le serveur de connexion SW.

A titre d'alternative, l'identifiant d'instance RW est déterminé par un serveur d'accueil ou un serveur central.

L'identifiant d'instance RW comprend un premier identifiant ID1 et un deuxième identifiant ID2.

Le deuxième identifiant ID2 permet d'identifier un serveur d'accueil au sein du réseau R. C'est un pointeur vers ce serveur d'accueil. Le serveur d'accueil est un serveur de connexion ou un autre serveur.

Dans le cas où le serveur d'accueil n'est pas le serveur de connexion associé à l'instance d'application, le premier identifiant ID1 est une valeur ou une chaine de caractères permettant d'une part au serveur d'accueil d'identifier un serveur de connexion et d'autre part, au serveur de connexion identifié d'identifier le canal de communication L.

Le premier identifiant ID1 représente de façon unique l'instance d'application web W au niveau du serveur d'accueil.

Il permet au serveur de connexion SW d'identifier le canal de communication L et, en conséquence l'instance d'application web W parmi les instances d'application qui lui sont connectées. Il constitue un pointeur local vers le canal de communication L.

Dans le mode de réalisation décrit où le serveur de connexion SW représente un serveur d'accueil, le deuxième identifiant ID2 permet d'identifier le serveur de connexion SW au sein du réseau R et le premier identifiant ID1 est une valeur ou une chaine de caractères permettant au serveur de connexion SW d'identifier le canal de communication L.

Le deuxième identifiant ID2 est par exemple un nom de domaine associé au serveur de connexion SW.

Le deuxième identifiant ID2 est par exemple un nom de domaine absolu, appelé également FQDN (« nom de domaine complètement qualifié » ou « Fully Qualified Domain Name » en anglais), c'est-à-dire un nom de domaine qui indique la position absolue d'un nœud représentant le serveur de connexion SW dans l'arborescence du réseau R en indiquant tous les domaines de niveau supérieur jusqu'à la racine.

Par exemple, le deuxième identifiant ID2 est « serveur45.communications.orange.fr ».

A titre alternatif, le deuxième identifiant est un nom de domaine relatif, par exemple «communications.orange.fr ». Dans cette variante, la génération du premier identifiant ID1 est par exemple centralisée au sein du domaine et le serveur de connexion SW doit se référer à une entité centrale, par exemple une base de données, pour obtenir tout ou partie du premier identifiant ID1.

Egalement, à titre d'alternative, le premier identifiant ID1 est déterminé selon des règles de détermination prédéfinies. Par exemple, chaque premier identifiant ID1 comporte un préfixe identifiant le serveur de connexion SW. Selon un autre exemple, des plages de numéros sont attribuées à chaque serveur de connexion par un serveur central et le serveur de connexion SW attribue le premier identifiant ID1 en fonction de la plage attribuée.

L'identifiant d'instance RW est par exemple obtenu par concaténation du premier identifiant ID1 et du deuxième identifiant ID2.

L'identifiant d'instance est par exemple une URI (pour « Uniform Resource Identifier » en anglais).

L'identifiant d'instance RW est par exemple de la forme : « rsi : ID1@ID2 » dans lequel «rsi » est un terme identifiant un identifiant d'instance.

Le serveur de connexion SW enregistre dans une table de correspondance du serveur de connexion SW, l'identifiant d'instance RW en association avec un identifiant de connexion IC.

L'identifiant de connexion IC est une valeur ou une chaine de caractères permettant au serveur de connexion SW de retrouver parmi différents canaux de connexion établis, le canal de communication L associé à l'instance d'application W.

L'identifiant de connexion IC est par exemple un identifiant du canal de communication L.

Lors d'une étape E58, le serveur de connexion SW commande l'enregistrement de l'identifiant d'instance RW en association avec un identifiant d'utilisateur IA dans la base de données BD.

L'identifiant d'utilisateur IA est un identifiant de joignabilité de l'utilisateur A, par exemple un numéro de téléphone d'un terminal de l'utilisateur A, par exemple du terminal TA ou une adresse de messagerie de l'utilisateur A. L'identifiant d'utilisateur IA est propre à l'utilisateur A. Il permet d'identifier de façon unique l'utilisateur A.

L'identifiant d'utilisateur IA est par exemple contenu dans la requête d'établissement de connexion RQE.

A titre d'alternative, l'identifiant d'utilisateur IA est par exemple obtenu en réponse à une requête d'identifiant utilisateur transmise à un serveur d'identité (non représenté) et contenant une preuve d'identité de l'utilisateur A. La preuve d'identité est par exemple obtenue lors d'une phase préalable d'authentification de l'utilisateur A, à l'aide par exemple d'un couple login/password, et transmise dans la requête d'établissement de connexion RQE.

A titre d'alternative, l'enregistrement de l'identifiant d'instance RW et l'obtention de l'identifiant utilisateur IA sont effectués par un serveur d'enregistrement (non représenté) et l'étape E58 est une étape d'envoi à ce serveur d'enregistrement d'une demande d'enregistrement de l'instance d'application web W. La demande d'enregistrement contient l'identifiant d'instance RW généré lors de l'étape E56.

A titre d'alternative, la demande d'enregistrement contient également des informations propres au service

Lors d'une étape E60, le serveur de connexion SW envoie un message d'acquittement ACK à l'instance d'application W via le canal de communication L et le navigateur NV.

Le message d'acquittement ACK constitue une preuve de l'établissement du canal de communication L.

Le message d'acquittement ACK contient l'identifiant d'instance RW.

A titre d'alternative, le message d'acquittement ACK ne contient pas l'identifiant d'instance RW.

Le message d'acquittement ACK est reçu par l'instance d'application W lors d'une étape E62 et un message indiquant à l'utilisateur que la connexion est établie est par exemple affiché sur une interface graphique du navigateur NV.

L'identifiant d'instance permet d'identifier de façon unique l'instance d'application dans le réseau. Le deuxième identifiant permet d'adresser un serveur d'accueil. Le premier identifiant permet ensuite au serveur d'accueil d'identifier le serveur de connexion associé puis au serveur de connexion d'identifier l'instance d'application à contacter parmi les instances d'applications qui lui sont connectées.

## Revendications

1. Procédé d'établissement d'une session de communication entre une instance d'une application Web (W) installée dans un terminal (TA) et une entité appelée (TB) comportant les étapes suivantes, mises en œuvre par ledit terminal (TA) :
- envoi (E6) d'une première requête (RQ1) d'établissement d'une session de communication entre ladite instance d'application (W) et ladite entité appelée (TB), ladite première requête (RQ1) étant formulée selon un premier protocole (PT1) ;
- réception (E20) d'une réponse (RP1) à ladite première requête (RQ1) signalant que la session de communication ne peut être établie en utilisant ledit premier protocole ;
- envoi (E24), suite à la réception de ladite réponse (RP1), d'une deuxième requête (RQ2) d'établissement de ladite session de communication, ladite deuxième requête (RQ2) correspondant à la première requête convertie par ledit terminal en une requête formulée selon un deuxième protocole (PT2).

2. Procédé d'établissement d'une session de communication selon la revendication 1 dans lequel le deuxième protocole est un protocole SIP (« Session Initiation Protocol »).

3. Procédé d'établissement d'une session de communication selon l'une des revendications précédentes dans lequel ladite réponse (RP1) contient au moins un paramètre de deuxième protocole.

4. Procédé d'établissement d'une session de communication selon l'une des revendications précédentes dans lequel ladite première requête (RQ1) contient un identifiant d'instance (RW) de ladite instance d'application (W) et un identifiant de l'entité appelée, ledit identifiant d'instance (RW) étant obtenu lors d'une étape préalable d'enregistrement.

5. Procédé d'établissement d'une session de communication selon l'une des revendications précédentes dans lequel ladite réponse (RP1) contient un identifiant de session généré pour ladite session de communication et dans lequel ledit identifiant de session est inséré dans ladite deuxième requête.

6. Procédé d'établissement d'une communication selon la revendication 4 comportant une étape de réception d'une réponse à ladite deuxième requête, ladite réponse signalant un refus d'établissement de session de communication dans le cas où ledit identifiant de session est invalide

7. Procédé de traitement d'une demande d'établissement d'une session de communication entre une instance d'une application Web (W) installée dans un terminal (TA) et une entité appelée (TB) comportant les étapes suivantes, mises en œuvre par un serveur de connexion (SW) :
- réception (E8) d'une première requête (RQ1) d'établissement d'une session de communication entre ladite instance application Web et ladite entité appelée, ladite première requête étant formulée selon un premier protocole (PT1) ;
- transmission (E18) d'une réponse (RP1) à ladite première requête (RQ1) signalant que la session de communication ne peut être établie en utilisant ledit premier protocole ;
- réception (E26), suite à la transmission de ladite réponse (RP1), d'une deuxième requête (RQ2) d'établissement de ladite session de communication, ladite deuxième requête (RQ2) correspondant à la première requête convertie par ledit terminal en une requête formulée selon un deuxième protocole (PT2).

8. Procédé de traitement d'une demande d'établissement d'une session de communication selon la revendication 7 dans lequel la deuxième requête (RQ2) comporte un identifiant de session (IdS), en ce que le procédé comporte une étape de vérification de la validité dudit identifiant de session et en ce que ladite deuxième requête n'est pas transmise si ledit identifiant de session est invalide.

9. Terminal (TA) comportant :
- un premier module d'envoi (TR1) d'une première requête (RQ1) d'établissement d'une session de communication entre une instance d'une application Web (W) et une entité appelée (TB), ladite première requête étant formulée selon un premier protocole (PT1) ;
- un module de réception (RR1) d'une réponse (RP1) à ladite première requête (RQ1) signalant que la session de communication ne peut être établie en utilisant ledit premier protocole;
- un deuxième module d'envoi (TR2), suite à la réception de ladite réponse (RP1), d'une deuxième requête (RQ2) d'établissement de ladite session de communication, ladite deuxième requête (RQ2) correspondant à la première requête convertie par ledit terminal en une requête formulée selon un deuxième protocole (PT2).

10. Produit programme d'ordinateur comprenant des instructions pour mettre en œuvre les étapes du procédé d'établissement d'une session de communication selon l'une des revendications 1 à 6, lorsqu'il est chargé et exécuté par un processeur.

11. Produit programme d'ordinateur comprenant des instructions pour mettre en œuvre les étapes du procédé de traitement d'une demande d'établissement d'une session de communication selon la revendication 7 ou 8, lorsqu'il est chargé et exécuté par un processeur.

## Patentansprüche

1. Verfahren zum Aufbau einer Kommunikationssitzung zwischen einer Instanz einer Internetanwendung (W), die in einem Endgerät (TA) installiert ist, und einer angerufenen Entität (TB), das die folgenden Schritte aufweist, die von dem Endgerät (TA) ausgeführt werden:
- Senden (E6) einer ersten Anfrage (RQ1) zum Aufbau einer Kommunikationssitzung zwischen der Anwendungsinstanz (W) und der angerufenen Entität (TB), wobei die erste Anfrage (RQ1) gemäß einem ersten Protokoll (PT1) formuliert ist;
- Empfangen (E20) einer Antwort (RP1) auf die erste Anfrage (RQ1), die signalisiert, dass die Kommunikationssitzung nicht unter Verwendung des ersten Protokolls aufgebaut werden kann;
- Senden (E24), nach dem Empfang der Antwort (RP1), einer zweiten Anfrage (RQ2) zum Aufbau der Kommunikationssitzung, wobei die zweite Anfrage (RQ2) der ersten Anfrage entspricht, die von dem Endgerät in eine Anfrage umgewandelt wurde, die gemäß einem zweiten Protokoll (PT2) formuliert ist.

2. Verfahren zum Aufbau einer Kommunikationssitzung nach Anspruch 1, bei dem das zweite Protokoll ein SIP-Protokoll ("Session Initiation Protocol") ist.

3. Verfahren zum Aufbau einer Kommunikationssitzung nach einem der vorhergehenden Ansprüche, bei dem die Antwort (RP1) mindestens einen Parameter des zweiten Protokolls enthält.

4. Verfahren zum Aufbau einer Kommunikationssitzung nach einem der vorhergehenden Ansprüche, bei dem die erste Anfrage (RQ1) eine Instanzkennung (RW) der Anwendungsinstanz (W) und eine Kennung der angerufenen Entität enthält, wobei die Instanzkennung (RW) in einem vorherigen Registrierungsschritt erhalten wird.

5. Verfahren zum Aufbau einer Kommunikationssitzung nach einem der vorhergehenden Ansprüche, bei dem die Antwort (RP1) eine Sitzungskennung enthält, die für die Kommunikationssitzung erzeugt wurde, und wobei die Sitzungskennung in die zweite Anfrage eingefügt wird.

6. Verfahren zum Aufbau einer Kommunikation nach Anspruch 4, das einen Schritt des Empfangens einer Antwort auf die zweite Anfrage aufweist, wobei die Antwort eine Ablehnung des Aufbaus einer Kommunikationssitzung in dem Fall signalisiert, dass die Sitzungskennung ungültig ist.

7. Verfahren zur Verarbeitung einer Anfrage zum Aufbau einer Kommunikationssitzung zwischen einer Instanz einer Internetanwendung (W), die in einem Endgerät (TA) installiert ist, und einer angerufenen Entität (TB), das die folgenden Schritte aufweist, die von einem Verbindungsserver (SW) ausgeführt werden:
- Empfangen (E8) einer ersten Anfrage (RQ1) zum Aufbau einer Kommunikationssitzung zwischen der Instanz der Internetanwendung und der angerufenen Entität, wobei die erste Anfrage gemäß einem ersten Protokoll (PT1) formuliert ist;
- Übertragen (E18) einer Antwort (RP1) auf die erste Anfrage (RQ1), die signalisiert, dass die Kommunikationssitzung nicht unter Verwendung des ersten Protokolls aufgebaut werden kann;
- Empfangen (E26), nach dem Übertragen der Antwort (RP1), einer zweiten Anfrage (RQ2) zum Aufbau der Kommunikationssitzung, wobei die zweite Anfrage (RQ2) der ersten Anfrage entspricht, die von dem Endgerät in eine Anfrage umgewandelt wurde, die gemäß einem zweiten Protokoll (PT2) formuliert ist.

8. Verfahren zur Verarbeitung einer Anfrage zum Aufbau einer Kommunikationssitzung nach Anspruch 7, bei dem die zweite Anfrage (RQ2) eine Sitzungskennung (IdS) aufweist, **dadurch gekennzeichnet, dass** das Verfahren einen Schritt zur Überprüfung der Gültigkeit der Sitzungskennung aufweist und dass die zweite Anfrage nicht übertragen wird, wenn die Sitzungskennung ungültig ist.

9. Endgerät (TA), das Folgendes aufweist:
- ein erstes Modul zum Senden (TR1) einer ersten Anfrage (RQ1) zum Aufbau einer Kommunikationssitzung zwischen einer Instanz einer Internetanwendung (W) und einer angerufenen Entität (TB), wobei die erste Anfrage gemäß einem ersten Protokoll (PT1) formuliert ist;
- ein Modul zum Empfangen (RR1) einer Antwort (RP1) auf die erste Anfrage (RQ1), die signalisiert, dass die Kommunikationssitzung nicht unter Verwendung des ersten Protokolls aufgebaut werden kann;
- ein erstes Modul zum Senden (TR2), nach dem Empfang der Antwort (RP1), einer zweiten Anfrage (RQ2) zum Aufbau der Kommunikationssitzung, wobei die zweite Anfrage (RQ2) der ersten Anfrage entspricht, die von dem Endgerät in eine Anfrage umgewandelt wurde, die gemäß einem zweiten Protokoll (PT2) formuliert ist.

10. Computerprogrammprodukt, das Anweisungen zum Durchführen der Schritte des Verfahrens zum Aufbau einer Kommunikationssitzung nach einem der Ansprüche 1 bis 6 aufweist, wenn es von einem Prozessor geladen und ausgeführt wird.

11. Computerprogrammprodukt, das Anweisungen zum Durchführen der Schritte des Verfahrens zur Verarbeitung einer Anfrage zum Aufbau einer Kommunikationssitzung nach Anspruch 7 oder 8 aufweist, wenn es von einem Prozessor geladen und ausgeführt wird.

## Claims

1. Method for establishing a communication session between an instance of a web application (W) installed on a terminal (TA) and a called entity (TB), comprising the following steps, implemented by said terminal (TA):
- sending (E6) a first request (RQ1) to establish a communication session between said application instance (W) and said called entity (TB), said first request (RQ1) being formulated in accordance with a first protocol (PT1);
- receiving (E20) a response (RP1) to said first request (RQ1) signalling that the communication session cannot be established using said first protocol;
- sending (E24), following the receipt of said response (RP1), a second request (RQ2) to establish said communication session, said second request (RQ2) corresponding to the first request converted, by said terminal, into a request formulated in accordance with a second protocol (PT2).

2. Method for establishing a communication session according to Claim 1, wherein the second protocol is a SIP ("Session Initiation Protocol") protocol.

3. Method for establishing a communication session according to either of the preceding claims, wherein said response (RP1) contains at least one parameter of a second protocol.

4. Method for establishing a communication session according to one of the preceding claims, wherein said first request (RQ1) contains an instance identifier (RW) of said application instance (W) and an identifier of the called entity, said instance identifier (RW) being obtained in a preliminary registration step.

5. Method for establishing a communication session according to one of the preceding claims, wherein said response (RP1) contains a session identifier generated for said communication session and wherein said session identifier is inserted into said second request.

6. Method for establishing a communication according to Claim 4, comprising a step of receiving a response to said second request, said response signalling a refusal to establish a communication session if said session identifier is invalid.

7. Method for processing a request to establish a communication session between an instance of a web application (W) installed on a terminal (TA) and a called entity (TB), comprising the following steps, implemented by a connection server (FW):
- receiving (E8) a first request (RQ1) to establish a communication session between said web application instance and said called entity, said first request being formulated in accordance with a first protocol (PT1);
- transmitting (E18) a response (RP1) to said first request (RQ1) signalling that the communication session cannot be established using said first protocol;
- receiving (E26), following the transmission of said response (RP1), a second request (RQ2) to establish said communication session, said second request (RQ2) corresponding to the first request converted, by said terminal, into a request formulated in accordance with a second protocol (PT2).

8. Method for processing a request to establish a communication session according to Claim 7, wherein the second request (RQ2) comprises a session identifier (IdS), and wherein the method comprises a step of checking the validity of said session identifier and wherein said second request is not transmitted if said session identifier is invalid.

9. Terminal (TA) comprising:
- a first sending module (TR1) for sending a first request (RQ1) to establish a communication session between an instance of a web application (W) and a called entity (TB), said first request being formulated in accordance with a first protocol (PT1);
- a reception module (RR1) for receiving a response (RP1) to said first request (RQ1) signalling that the communication session cannot be established using said first protocol;
- a second sending module (TR2) for sending, following the receipt of said response (RP1), a second request (RQ2) to establish said communication session, said second request (RQ2) corresponding to the first request converted, by said terminal, into a request formulated in accordance with a second protocol (PT2).

10. Computer program product comprising instructions for implementing the steps of the method for establishing a communication session according to one of Claims 1 to 6 when it is loaded and executed by a processor.

11. Computer program product comprising instructions for implementing the steps of the method for processing a request to establish a communication session according to Claim 7 or 8 when it is loaded and executed by a processor.
